# EUROPEAN PATENT APPLICATION

(11) **EP 4 550 475 A1**
(43) Date of publication of application: **07.05.2025**
(21) Application number: 22962490.3
(22) Date of filing: 21.10.2022
(51) Int. Cl.: H01M 4/587

(54) **CARBONACEOUS MATERIAL AND PREPARATION METHOD THEREFOR, AND SECONDARY BATTERY AND ELECTRICAL DEVICE COMPRISING SAME**

(71) Applicant: Contemporary Amperex Technology (Hong Kong) Limited, Central, Hong Kong (CN)
(72) Inventor: CHEN, Xiaoxia, Ningde, Fujian 352100 (CN); MA, Yu, Ningde, Fujian 352100 (CN); ZHANG, Xinxin, Ningde, Fujian 352100 (CN); OUYANG, Chuying, Ningde, Fujian 352100 (CN); ZHENG, Xiaoji, Ningde, Fujian 352100 (CN); CHEN, Shangdong, Ningde, Fujian 352100 (CN); LIN, Wenguang, Ningde, Fujian 352100 (CN)
(74) Representative: Gong, Jinping
(86) International application number: PCT/CN2022/126837
(87) International publication number: WO 2024/082309

(57) **Abstract**

The present application provides a carbonaceous material and a preparation method thereof, as well as a secondary battery, and an electrical apparatus containing the same. The content of element O of the carbonaceous material tested by X-ray photoelectron spectroscopy is denoted as A, the content of element O of the carbonaceous material tested by elemental analysis is denoted as B, and the carbonaceous material satisfies A/B≥3 and 5wt%≤A≤20wt%. The carbonaceous material provided in the present application enables the secondary battery to have substantially improved cycling performance and rate performance.

## Description

### TECHNICAL FIELD

The present application belongs to the field of battery technologies, and in particular to a carbonaceous material and a preparation method thereof, as well as a secondary battery, and an electrical apparatus containing the same.

### BACKGROUND ART

In recent years, secondary batteries are more widely used in energy storage power source systems such as water power, thermal power, wind power and solar power stations, as well as power tools, electric bicycles, electric motorcycles, electric vehicles, military equipment, aerospace and other fields. With the application and promotion of secondary batteries, their energy density, service life and rate performance has attracted more and more attention. Graphite is the most commonly used negative electrode active material for secondary batteries, but its theoretical gravimetric specific capacity is only 372mAh/g, and accordingly room for energy density improvement is very limited. Moreover, graphite has a small interlayer spacing, and accordingly the improvement of rate performance is also limited. As a new type of negative electrode active material, hard carbon can realize the rapid intercalation and deintercalation of active ions during charging and discharging of secondary batteries, so it has a broad development prospect. However, the cycling performance and rate performance of commercially available hard carbon materials are unsatisfactory.

### SUMMARY OF THE INVENTION

An objective of the present application is to provide a carbonaceous material and a preparation method thereof, as well as a secondary battery, and an electrical apparatus containing the same. The carbonaceous material enables the secondary battery to have substantially improved cycling performance and rate performance.

In a first aspect, the present application provides a carbonaceous material, where the content of element O of the carbonaceous material tested by X-ray photoelectron spectroscopy is denoted as A, the content of element O of the carbonaceous material tested by elemental analysis is denoted as B, and the carbonaceous material satisfies A/B≥3 and 5wt%≤A ≤20wt%.

The inventors of the present application surprisingly found that when the carbonaceous material satisfies A/B≥3 and 5wt%≤A≤20wt%, the secondary battery can have greatly improved cycling performance and rate performance. The surface of the carbonaceous material provided in the present application has a relatively high content of element O. During charging (i.e., before formation of an SEI film), negative charges are enriched at O atom sites on the surface of the carbonaceous material, which can induce the rapid decomposition of organic solvents such as esters or ethers in an electrolyte solution to increase the content of organic components of the SEI film. The inventors of the present application also found that these organic components have a large number of advantages compared with inorganic components: first, the organic components of the SEI film have higher flexibility, which can improve the deformation resistance of the SEI film, make it stable during a long-term cycle, thereby reducing the consumption of active ions during the cycle, and further improving the cycling performance of the secondary battery; second, the organic components of the SEI film can improve the ion conductivity of the negative electrode side, which is beneficial to further improving the rate performance of the secondary battery, and avoiding the reduction and precipitation of active ions on the negative electrode side during the cycle, which is also conducive to further improving the cycling performance of the secondary battery; third, the O atoms on the surface of the carbonaceous material can also participate in the formation of the SEI film, which is conducive to improving the adhesion of the SEI film on the surface of carbonaceous material particles, and is conducive to the high stability of the SEI film during the long-term cycle, thereby reducing the consumption of active ions during the cycle and further improving the cycling performance of the secondary battery.

In any of embodiments of the present application, 3≤A/B≤10, optionally, 6≤A/B≤9.2. Thus, it helps to further improve the cycling performance and rate performance of the secondary battery.

In any of embodiments of the present application, 5 wt%≤A≤16wt%, optionally, 10wt%≤A≤16wt%. Thus, it helps to further improve the cycling performance and rate performance of the secondary battery.

In any of embodiments of the present application, 1.5wt%≤B≤6wt% and optionally, 1.5wt%≤B≤3wt%. Thus, it helps to further improve the cycling performance and rate performance of the secondary battery.

In any of embodiments of the present application, the carbonaceous material has a specific surface area of ≤10 m²/g, optionally 0.1 m²/g-10 m²/g. The specific surface area of the carbonaceous material provided in the present application is low, which helps to reduce the surface activity of the carbonaceous material, and reduce the formation of the SEI film, thereby reducing the irreversible consumption of active ions, enabling the carbonaceous material to have higher specific capacity and higher initial Coulombic efficiency, and also making the secondary battery have better cycling performance and rate performance.

In any of embodiments of the present application, the carbonaceous material includes a plurality of nanopore structures.

In any of embodiments of the present application, in a Raman spectrum of the carbonaceous material, I_{d}/I_{g} is 0.90-1.25, optionally 0.95-1.10, I_{d} indicates an intensity of peak d of Raman shift in the range of 1350±50cm⁻¹, and I_{g} indicates an intensity of peak g of Raman shift in the range of 1580±50cm⁻¹. In this case, the carbonaceous material has a higher specific capacity and higher initial coulombic efficiency, as well as excellent rate performance.

In any of embodiments of the present application, a crystal face (002) of the carbonaceous material has an interlayer spacing of ≥0.37 nm, optionally 0.37 nm-0.42 nm.

In any of embodiments of the present application, in an X-ray diffraction spectrum of the carbonaceous material, the peak of the crystal face (002) has a corresponding 2θ value between 22° and 24°.

In any of embodiments of the present application, the carbonaceous material has a volume particle size Dv50 of 3 µm-15 µm, optionally 4 µm-6 µm.

In any of embodiments of the present application, the carbonaceous material has a volume particle size Dv90 of 8 µm-30 µm, optionally 9 µm-12 µm.

When the volume particle size Dv50 and/or Dv90 of the carbonaceous material is in an appropriate range, it is beneficial to improving the active ion and electron transport performance, thereby further improving the cycling performance and rate performance of the secondary battery.

In any of embodiments of the present application, the carbonaceous material has a powder compacted density of 0.92 g/cm³-1.05 g/cm³, optionally 0.95 g/cm³-1.02 g/cm³ under an acting force of 50000 N. When the powder compacted density of the carbonaceous material is within an appropriate range, the compacted density of the negative electrode plate can be increased, thereby increasing the energy density of the secondary battery.

In any of embodiments of the present application, the carbonaceous material has a tap density of 0.80 g/cm³-0.95 g/cm³, optionally 0.85 g/cm³-0.90 g/cm³. When the tap density of the carbonaceous material is within an appropriate range, the compacted density of the negative electrode plate can be increased, thereby increasing the energy density of the secondary battery.

In a second aspect, the present application provides a preparation method of a carbonaceous material, including the steps of S10, providing a raw material, the raw material including a hard carbon material; S20, grinding the raw material with a grinding medium and an oxidizing solution in a grinder; S30, washing and drying a product obtained from the grinding to obtain a carbonaceous material, where the content of element O of the carbonaceous material tested by X-ray photoelectron spectroscopy is denoted as A, the content of element O of the carbonaceous material tested by elemental analysis is denoted as B, and the carbonaceous material satisfies A/B≥3 and 5wt%≤A≤20wt%.

Currently commercially available hard carbon materials have the cycling performance and rate performance unsatisfactory. The preparation method provided in the present application can substantially optimize the cycling performance and rate performance of the raw material (i.e., the hard carbon material). The preparation method provided in the present application is universally applicable.

In any of embodiments of the present application, in S20, a ratio of dry weight of the raw material to mass of the grinding medium is ≤1, optionally 0.2-1. Therefore, on the one hand, the production efficiency can be improved, and on the other hand, the surface of the obtained carbonaceous material can have an appropriate content of oxygen-containing functional groups, and the carbonaceous material can also greatly improve the cycling performance and rate performance of the secondary battery.

In any of embodiments of the present application, in S20, a ratio of dry weight of the raw material to mass of the oxidizing solution is ≤0.6, optionally 0.1-0.6. Therefore, on the one hand, the production efficiency can be improved, and on the other hand, the surface of the obtained carbonaceous material can have an appropriate content of oxygen-containing functional groups, and the carbonaceous material can also greatly improve the cycling performance and rate performance of the secondary battery.

In any of embodiments of the present application, in S20, the oxidizing solution has a concentration of ≥0.1 moL/L, optionally 0.1 moL/L-10 moL/L. Therefore, on the one hand, the production efficiency can be improved and safety in production can be ensured, and on the other hand, the surface of the obtained carbonaceous material can have an appropriate content of oxygen-containing functional groups, and the carbonaceous material can also greatly improve the cycling performance and rate performance of the secondary battery.

In any of embodiments of the present application, in S20, the grinding time is 1h-24h, optionally 4h-16h. Therefore, the surface of the obtained carbonaceous material can have an appropriate content of oxygen-containing functional groups, and the carbonaceous material can also greatly improve the cycling performance and rate performance of the secondary battery.

In any of embodiments of the present application, in S20, the oxidizing solution has a solute including one or more selected from nitric acid, sulfuric acid and perchloric acid and has a solvent including water. Therefore, on the one hand, it can ensure that the surface of the obtained carbonaceous material has an appropriate content of oxygen-containing functional groups, on the other hand, it can avoid the introduction of other impurity elements, thereby reducing the irreversible consumption of active ions.

In any of embodiments of the present application, in S20, the grinding speed is 100 rpm-1200 rpm.

In any of embodiments of the present application, in S20, the grinder includes a ball mill.

In any of embodiments of the present application, in S20, the volume percentage of all materials in the grinder is 1/5-3/4, based on a volume of the grinder. The production efficiency can thus be improved on the one hand, and the wet grinding effect can be improved on the other hand.

In any of embodiments of the present application, in S10, the raw material has a volume particle size Dv50 of 3 µm-15 µm, optionally 4 µm-6 µm.

In any of embodiments of the present application, in S10, the raw material has a volume particle size Dv90 of 8 µm-30 µm, optionally 9 µm-12 µm.

When the volume particle size Dv50 and/or Dv90 of the raw material is adjusted within an appropriate range, it is beneficial to improving the active ion and electron transport performance of the obtained carbonaceous material, thereby further improving the cycling performance and rate performance of the secondary battery.

In any of embodiments of the present application, the raw material is prepared by heating a carbon source to 1000°C-1600°C at a rate of ≤10°C/min under a shielding gas atmosphere and holding the temperature for 1h-24h, and then crushing to obtain the raw material.

In a third aspect, the present application provides a secondary battery including a negative electrode plate, the negative electrode plate contains the carbonaceous material of the first aspect of the present application and a carbonaceous material prepared by the method of the second aspect of the present application.

In a fourth aspect, the present application further provides an electrical apparatus, including the secondary battery of the third aspect of the present application.

The carbonaceous material provided in the present application enables the secondary battery to have substantially improved cycling performance and rate performance. The electrical apparatus of the present application includes the secondary battery provided in the present application, and thus have at least the same advantages as those of the secondary battery.

### DESCRIPTION OF DRAWINGS

In order to more clearly illustrate the technical solutions of the embodiments of the present application, the drawings to be used in embodiments of the present application will be briefly introduced below. Apparently, the drawings described below are merely some embodiments of the present application. For those of ordinary skills in the art, other drawings may also be obtained based on these drawings without making creative work.
Fig. 1 is a schematic diagram of an embodiment of a battery cell according to the present application.
Fig. 2 is an exploded view of an embodiment of a battery cell according to the present application.
Fig. 3 is a schematic diagram of an embodiment of a battery module according to the present application.
Fig. 4 is a schematic diagram of an embodiment of a battery pack according to the present application.
Fig. 5 is an exploded view of the embodiment of the battery pack shown in Fig. 4.
Fig. 6 is a schematic diagram of an embodiment of an electrical apparatus using a secondary battery of the present application as a power source.

In the drawings, the drawings may not be drawn to actual scale. Description of reference numerals: 1 battery pack; 2 upper box body; 3 lower box body; 4 battery module; 5 battery cell; 51 case; 52 electrode assembly; and 53 cover plate.

### DETAILED DESCRIPTION

The following specifically discloses in detail embodiments of a carbonaceous material and a preparation method thereof, as well as a secondary battery, and an electrical apparatus containing the same, with appropriate reference to the drawings. However, there are cases where unnecessary detailed descriptions are omitted. For example, there are cases where detailed descriptions of well-known items and repeated descriptions of actually identical structures are omitted. This is to avoid unnecessarily prolonging the following description, for ease of understanding by those skilled in the art. In addition, the drawings and subsequent descriptions are provided for those skilled in the art to fully understand the present application, and are not intended to limit the subject matter recited in the claims.

A "range" disclosed in the present application is defined in terms of a lower limit and an upper limit, and a given range is defined by selecting a lower limit and an upper limit, which define the boundaries of the particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also expected. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specifically stated, all embodiments and optional embodiments of the present application may be combined with each other to form new technical solutions, and such technical solutions should be considered as being included in the disclosure of the present application.

Unless otherwise specifically stated, all technical features and optional technical features of the present application may be combined with each other to form new technical solutions, and such technical solutions should be considered as being included in the disclosure of the present application.

Unless otherwise specifically stated, all steps in the present application may be performed sequentially or randomly, and are preferably performed sequentially. For example, the method includes steps (a) and (b), indicating that the method may include steps (a) and (b) performed sequentially, or may include steps (b) and (a) performed sequentially. For example, the reference to the method may further comprise step (c), meaning that step (c) may be added to the method in any order, for example, the method may comprise steps (a), (b) and (c), or may comprise steps (a), (c) and (b), or may comprise steps (c), (a) and (b), and so on.

Unless otherwise specifically stated, the "including" and "comprising" mentioned in the present application mean open-ended, or may be closed-ended. For example, the "including" and "comprising" may indicate that it is also possible to include or comprise other components not listed, and it is also possible to include or comprise only the listed components.

Unless otherwise specified, the term "or" is inclusive in the present application. By way of example, the phrase "A or B" means "A, B, or both A and B". More specifically, the condition "A or B" is satisfied under any one of the following conditions: A is true (or present) and B is false (or absent); A is false (or absent) and B is true (or present); or both A and B are true (or present).

If not specifically stated, the terms used herein have the well-known meanings commonly understood by those skilled in the art.

If not otherwise specified, values of the parameters mentioned in the present application may be determined by various test methods commonly used in the field, for example, according to the test methods given in the present application.

If not otherwise specified, in the present application, the term "active ions" refers to ions, including but not limited to lithium ions, sodium ions, and the like, that can be intercalated and deintercalated back and forth between the positive and negative electrodes of secondary batteries.

In the present application, the terms "a plurality of" and "multiple" refer to two or more.

### Carbonaceous material

In a first aspect, an embodiment of the present application provides a carbonaceous material. The content of element O of the carbonaceous material tested by X-ray Photoelectron Spectroscopy (XPS) is denoted as A, the content of element O of the carbonaceous material tested by Elemental Analysis (EA) is denoted as B, and the carbonaceous material satisfies A/B≥3 and 5wt%≤A≤20wt%.

The content of element O tested by X-ray photoelectron spectroscopy is the content of element O on a surface of the carbonaceous material, while the content of element O tested by elemental analysis is the content of element O of the whole sample of the carbonaceous material. Before X-ray photoelectron spectroscopy and elemental analysis, the carbonaceous material needs to be dried in vacuum at 120°C for 12h, and then sealed and stored in an aluminum-plastic bag.

X-ray photoelectron spectrometry is performed by an X-ray photoelectron spectrometer. A Nexsa type/EscaLab 250Xi X-ray photoelectron spectrometer from Thermo Fisher Scientific, USA is used as a test instrument.

Elemental analysis is performed by an elemental analyzer, and the test mode is O mode, that is, a sample is cracked in a H₂/He gas mixture at 1150°C and subsequently converted to CO by reduction with carbon powder, and the content of element O is obtained by means of thermal conductivity detection. The mass of the test sample may be 30 mg or more. The test instrument may be a vario macro cube elemental analyzer from Elementar (Germany) or a Flash 2000/Flash Smart elemental analyzer from Thermo Fisher Scientific (USA).

The inventors of the present application surprisingly found that when the carbonaceous material satisfies A/B≥3 and 5wt%≤A≤20wt%, the secondary battery can have greatly improved cycling performance and rate performance. The surface of the carbonaceous material provided in the present application has a relatively high content of element O. During charging (i.e., before formation of an SEI film), negative charges are enriched at O atom sites on the surface of the carbonaceous material, which can induce the rapid decomposition of organic solvents such as esters or ethers in an electrolyte solution to increase the content of organic components of the SEI film. The inventors of the present application also found that these organic components have a large number of advantages compared with inorganic components: first, the organic components of the SEI film have higher flexibility, which can improve the deformation resistance of the SEI film, make it stable during a long-term cycle, thereby reducing the consumption of active ions during the cycle, and further improving the cycling performance of the secondary battery; second, the organic components of the SEI film can improve the ion conductivity of the negative electrode side, which is beneficial to further improving the rate performance of the secondary battery, and avoiding the reduction and precipitation of active ions on the negative electrode side during the cycle, which is also conducive to further improving the cycling performance of the secondary battery; third, the O atoms on the surface of the carbonaceous material can also participate in the formation of the SEI film, which is conducive to improving the adhesion of the SEI film on the surface of carbonaceous material particles, and is conducive to the high stability of the SEI film during the long-term cycle, thereby reducing the consumption of active ions during the cycle and further improving the cycling performance of the secondary battery.

When A/B is less than 3 or A is less than 5wt%, the content of element O on the surface of the carbonaceous material is low, which is not conducive to the formation of the SEI film with excellent performance, resulting in the cycling performance and rate performance of the secondary battery being unsatisfactory. When A is greater than 20wt%, the content of element O on the surface of the carbonaceous material is too high, and the hydrogen-bond interaction between O atoms and water molecules is too strong, resulting in too many water molecule clustering to block the surface of the carbonaceous material, which hinders intercalation and deintercalation of the active ions, and thus making the cycling performance and rate performance of the secondary battery unsatisfactory. In addition, when the content of element O on the surface of the carbonaceous material is too high, too many active ions are captured by the O atoms, resulting in blocked transport coherence of reactive ions on the particle surface, deteriorating kinetic performance of the carbonaceous material, and thus making the cycling performance and rate performance of the secondary battery unsatisfactory

In some embodiments, optionally, 3≤A/B≤10, 4≤A/B≤10, 5≤A/B≤9.5, and 6≤A/B≤9.2. Thus, it helps to further improve the cycling performance and rate performance of the secondary battery.

In some embodiments, optionally, 5wt%≤A≤18wt%, 5wt%≤A≤16wt%, 6wt%≤A≤16wt%, 7wt%≤A≤16wt%, 8wt%≤A≤16wt%, 9wt%≤A≤16wt%, and 10wt%≤A≤16wt%. Thus, it helps to further improve the cycling performance and rate performance of the secondary battery.

The inventors of the present application have also found in the research that the content of element O of the entire sample of the carbonaceous material also affects the cycling performance and rate performance of the secondary battery. Since active ions cannot be irreversibly deintercalated after O atoms are bonded with the active ions, the irreversible consumption of active ions is higher when the whole sample of carbonaceous material has a higher content of element O. This reduces the energy density of the secondary battery and affects the cycling performance of the secondary battery. In some embodiments, 0<B≤6wt%, 1.5wt%≤B≤6wt%, 1.5wt%≤B≤5wt%, 1.5wt%≤B≤4wt%, and 1.5wt%≤B≤3wt%. Thus, it helps to further improve the cycling performance and rate performance of the secondary battery.

In some embodiments, the carbonaceous material satisfies 6≤A/B≤9.2, 10wt%≤A≤16 wt% and 1.5wt%≤B≤3 wt%. The inventors of the present application have also found in the course of research that, in this case, the secondary battery may have both better cycling performance and rate performance.

In some embodiments, the carbonaceous material has a specific surface area of ≤10 m²/g, optionally 0.1 m²/g-10 m²/g, 1 m²/g-10 m²/g, 2 m²/g-10 m²/g, 3 m²/g-10 m²/g, 4 m²/g-10 m²/g, 4 m²/g-9 m²/g, 4 m²/g-8.5 m²/g, 4 m²/g-8.2 m²/g, 4 m²/g-8 m²/g, 4 m²/g-7.8 m²/g, 4 m²/g-7.6 m²/g, 4.5 m²/g-7.6 m²/g, and 5 m²/g-7.6 m²/g. The specific surface area of the carbonaceous material provided in the present application is low, which helps to reduce the surface activity of the carbonaceous material, and reduce the formation of the SEI film, thereby reducing the irreversible consumption of active ions, enabling the carbonaceous material to have higher specific capacity and higher initial Coulombic efficiency, and also making the secondary battery have better cycling performance and rate performance. When the specific surface area of carbonaceous material is high, more binder needs to be added for bonding between particles during preparation of electrode plates. The binder is generally an insulating substance, which will cause an increase in the internal resistance of the battery and a decrease in the ionic conductivity and electronic conductivity, leading to a deterioration in the cycling performance and rate performance of the secondary battery.

In the present application, the specific surface area of the carbonaceous material has a meaning well known in the art and can be determined using instruments and methods known in the art. For example, it can be tested by the nitrogen-adsorption based specific surface area analysis test method with reference to GB/T 19587-2017 and calculated by the BET (Brunauer Emmett Teller) method, where the nitrogen-adsorption based specific surface area analysis test can be determined using an ASAP 3020 analyzer for measuring the surface area and pore size from Micromeritics Instrument Corporation, USA.

In some embodiments, the carbonaceous material includes a plurality of nanopore structures.

In some embodiments, the carbonaceous material may have a regular or irregular morphology, for example, the carbonaceous material may have an irregular polygonal shape.

In some embodiments, the carbonaceous material has a low content of impurity elements, the impurity elements mainly including Na. In some embodiments, the content of Na element is ≤ 0.011wt%, optionally ≤0.005wt%.

In some embodiments, in a Raman spectrum of the carbonaceous material, I_{d}/I_{g} is 0.90-1.25, I_{d} indicates an intensity of peak d of Raman shift in the range of 1350±50cm⁻¹, and I_{g} indicates an intensity of peak g of Raman shift in the range of 1580±50cm⁻¹. For example, I_{d}/I_{g} may be 0.90, 0.95, 1.00, 1.05, 1.10, 1.15, 1.20, 1.25 or within a range defined by any of these values. Optionally, I_{d}/I_{g} may be 0.95-1.10.

The Raman spectrum of the carbonaceous material may be tested using a Raman spectrometer. The intensity of peak d and the intensity of peak g of 100 points are obtained in the test, I_{d}/I_{g} of the 100 points are calculated, 30 I_{d}/I_{g} each of the largest and smallest are removed, and the average of the remaining 40 I_{d}/I_{g} is used as I_{d}/I_{g} of the carbonaceous material. The test instrument may be a Horiba LabRAM HR800 Raman spectrometer. The test conditions may be as follows: excitation wavelength of 532 nm, grating 600, objective 50x, integration time of 10s, cumulative number of 3, and surface scanning.

The peak d arises from the lattice defects of carbon atoms, and the peak g arises from the in-plane vibration of sp2 carbon atoms. In the carbonaceous material structure, the intensity of the peak d is related to the number of defects in the carbonaceous material structure, and the intensity of the peak g is related to the number of graphite microcrystals in the carbonaceous material structure, so I_{d}/I_{g} can characterize the degree of order in the carbonaceous material structure. As the I_{d}/I_{g} decreases, the degree of order of the carbonaceous material structure as well as the integrity of a carbon plane increases, and the initial Coulombic efficiency of the carbonaceous material increases, but the specific capacity decreases and the rate performance deteriorates. The carbonaceous material of the present application satisfies that the I_{d}/I_{g} is equal to 0.90-1.25. In this case, the degree of order of the carbonaceous material structure is moderate, so that the carbonaceous material has a higher specific capacity and a higher initial Coulombic efficiency, as well as excellent rate performance.

In some embodiments, a crystal face (002) of the carbonaceous material has an interlayer spacing of ≥0.37 nm, optionally 0.37 nm-0.42 nm.

In some embodiments, in an X-ray diffraction spectrum of the carbonaceous material, the peak of the crystal face (002) has a corresponding 2θ value between 22° and 24°.

In the present application, the interlayer spacing of the crystal face (002) of the carbonaceous material can be tested using an X-ray diffractometer with reference to JIS K 0131-1996, JB/T 4220-2011. The test instrument may be a Bruker D8 Discover X-ray diffractometer.

In some embodiments, the carbonaceous material has a volume particle size Dv50 of 3 µm-15 µm, optionally 4 µm-6 µm.

In some embodiments, the carbonaceous material has a volume particle size Dv90 of 8 µm-30 µm, optionally 9 µm-12 µm.

In some embodiments, the carbonaceous material satisfies both a volume particle size Dv50 of 3 µm-15 µm and a volume particle size Dv90 of 8 µm-30 µm. Optionally, the carbonaceous material has a volume particle size Dv50 of 4 µm-6 µm as well as a volume particle size Dv90 of 9 µm-12 µm.

When the volume particle size Dv50 and/or Dv90 of the carbonaceous material is in an appropriate range, it is beneficial to improving the active ion and electron transport performance, thereby further improving the cycling performance and rate performance of the secondary battery.

In the present application, the volumetric particle sizes Dv50 and Dv90 of the carbonaceous material have the well-known meanings known in the art, which indicate the particle sizes corresponding to a cumulative volume distribution percentage of the material of 50% and 90%, respectively, and can be determined by instruments and methods known in the art. For example, it can be determined by using a laser particle size analyzer with reference to the GB/T 19077-2016 Particle size analysis-Laser diffraction method. The test instrument may be a Mastersizer 2000E laser particle size analyzer from Malvern Instruments Ltd, UK.

In some embodiments, the carbonaceous material has a powder compacted density of 0.92 g/cm³-1.05 g/cm³, optionally 0.95 g/cm³-1.02 g/cm³ under an acting force of 50000 N. When the powder compacted density of the carbonaceous material is within an appropriate range, the compacted density of the negative electrode plate can be increased, thereby increasing the energy density of the secondary battery.

In the present application, the compacted density of the carbonaceous material has a meaning well-known in the art, and can be tested by instruments and methods known in the art. For example, it can be measured by an electronic pressure tester (e.g., it may be of UTM7305 type) with reference to standard GB/T24533-2009. An exemplary test method is as follows: weighing 1g of carbonaceous material powder, adding it to a mold with a bottom area of 1.327cm², pressurizing it to 5000 kg (equivalent to 50000 N), holding the pressure for 30s, and then unloading the pressure and holding it for 10s, and then recording and calculating to obtain the powder compacted density of the carbonaceous material under an acting force of 50000 N.

In some embodiments, the carbonaceous material has a tap density of 0.80 g/cm³-0.95 g/cm³, optionally 0.85 g/cm³-0.90 g/cm³. When the tap density of the carbonaceous material is within an appropriate range, the compacted density of the negative electrode plate can be increased, thereby increasing the energy density of the secondary battery.

In the present application, the tap density of the carbonaceous material has a meaning well-known in the art, and can be tested by methods known in the art. For example, it can be tested using a powder tap density tester with reference to GB/T 5162-2006. The test instrument may be Dandong Baxter BT-301.

### Preparation method of carbonaceous material

In a second aspect, an embodiment of the present application provides a method for preparing a carbonaceous material, by which the carbonaceous material of any of the embodiments of the first aspect of the present application can be prepared.

The method for preparing a carbonaceous material includes the steps of S10, providing a raw material, the raw material comprising a hard carbon material; S20, grinding the raw material with a grinding medium and an oxidizing solution in a grinder; S30, washing and drying a product obtained from the grinding to obtain a carbonaceous material, where the content of element O of the carbonaceous material tested by X-ray photoelectron spectroscopy is denoted as A, the content of element O of the carbonaceous material tested by elemental analysis is denoted as B, and the carbonaceous material satisfies A/B≥3 and 5wt%≤A≤20wt%.

In the present application, a suitable content of oxygen-containing functional groups is introduced on the surface of the hard carbon material by a wet grinding process, so as to obtain the carbonaceous material satisfying A/B ≥3 and 5wt%≤A≤20wt%. In the present application, the oxygen-containing functional group may include one or more of a phenol group, an ether group, a quinone group, a carbonyl group, an anhydride, an ester group, a hydroxyl group, a carboxyl group, and the like. The inventors of the present application have found in the course of research that, during charging (i.e., before formation of an SEI film), negative charges can be enriched at oxygen-containing functional groups on the surface of the carbonaceous material, which can induce the rapid decomposition of organic solvents such as esters or ethers, to increase the content of organic components of the SEI film.

The inventors of the present application also found that these organic components have a large number of advantages compared with inorganic components: first, the organic components of the SEI film have higher flexibility, which can improve the deformation resistance of the SEI film, make it stable during a long-term cycle, thereby reducing the consumption of active ions during the cycle, and further improving the cycling performance of the secondary battery; second, the organic components of the SEI film can improve the ion conductivity of the negative electrode side, which is beneficial to further improving the rate performance of the secondary battery, and avoiding the reduction and precipitation of active ions on the negative electrode side during the cycle, which is also conducive to further improving the cycling performance of the secondary battery; third, the O atoms on the surface of the carbonaceous material can also participate in the formation of the SEI film, which is conducive to improving the adhesion of the SEI film on the surface of carbonaceous material particles, and is conducive to the high stability of the SEI film during the long-term cycle, thereby reducing the consumption of active ions during the cycle and further improving the cycling performance of the secondary battery.

Thus, the carbonaceous material obtained by the preparation method of the present application has good cycling performance and rate performance. The method for preparing a carbonaceous material provided in the present application is simple and suitable for commercial production.

Currently commercially available hard carbon materials have the cycling performance and rate performance unsatisfactory. The preparation method provided in the present application can substantially optimize the cycling performance and rate performance of the raw material (i.e., the hard carbon material). The preparation method provided in the present application is universally applicable. The raw materials can be obtained commercially or prepared according to the method provided in the present application.

In some embodiments, the raw material is prepared by heating a carbon source to 1000°C-1600°C at a rate of ≤10°C/min under a shielding gas atmosphere and holding the temperature for 1h-24h, and then crushing to obtain the raw material. The carbon source may include one or more of polymers, resins, and biomass materials, and the shielding gas may include nitrogen, argon, or a combination thereof.

In some embodiments, in S10, the raw material has a volume particle size Dv50 of 3 µm-15 µm, optionally 4 µm-6 µm. In some embodiments, in S10, the raw material has a volume particle size Dv90 of 8 µm-30 µm, optionally 9 µm-12 µm. In some embodiments, in S10, the raw material has a volume particle size Dv50 of 3 µm-15 µm and a volume particle size Dv90 of 8 µm-30 µm, optionally, the raw material has a particle size Dv50 of 4 µm-6 µm and a volume particle size Dv90 of 9 µm-12 µm. When the volume particle size Dv50 and/or Dv90 of the raw material is adjusted within an appropriate range, it is beneficial to improving the active ion and electron transport performance of the obtained carbonaceous material, thereby further improving the cycling performance and rate performance of the secondary battery.

In some embodiments, in S20, a ratio of dry weight of the raw material to mass of the grinding medium is ≤1, for example, it may be ≤0.9, ≤0.8, ≤0.7, ≤0.6, and ≤0.5.

The grinding medium exerts a large shear force on the raw material particles during grinding. Under the shear force, covalent bonds on the surface of the raw material particles are easy to be broken, and then sites of this part of broken bonds react readily with the oxidizing solution to introduce oxygen-containing functional groups. When the ratio of dry weight of the raw material to mass of the grinding medium is too large, it will result in too few grinding medium to exert the shear force, which will result in only a small number of covalent bonds on the surface of the raw material particles being broken to introduce the oxygen-containing functional groups. Then, fewer oxygen-containing functional groups are introduced on the surface of the obtained carbonaceous material particles, and the cycling performance and rate performance of the secondary battery remain poor. In this case, the carbonaceous material has a low content of element O as tested by X-ray photoelectron spectroscopy.

The actual volume of the grinder and the wet grinding effect also need to be considered in the design of the ratio of dry weight of the raw material to mass of the grinding medium. Further, the ratio of dry weight of the raw material to mass of the grinding medium should not be too small. When materials in the grinder have the same volume, because the ratio of dry weight of the raw material to mass of the grinding medium is too small, it will result in too little raw material that can be processed in each grinding, affecting the production efficiency. When the raw material has the same dry weight, because the ratio of dry weight of the raw material to mass of the grinding medium is too small, the mass of the grinding medium is too large, and in this case there is too much material in the grinder, affecting the wet grinding effect. In addition, there may also be a situation in which the specific surface area of the obtained carbonaceous material is substantially increased and/or more oxygen-containing functional groups are introduced on the surface of the carbonaceous material particles, resulting in the carbonaceous material having a high content of element Os as tested by X-ray photoelectron spectroscopy, further resulting in a deterioration in optimization effect of the cycling performance and rate performance of the secondary battery.

In some embodiments, in S20, a ratio of dry weight of the raw material to mass of the grinding medium may be 0.2-1, 0.3-0.9, 0.4-0.8, and 0.4-0.7 Therefore, on the one hand, the production efficiency can be improved, and on the other hand, the surface of the obtained carbonaceous material can have an appropriate content of oxygen-containing functional groups, and the carbonaceous material can also greatly improve the cycling performance and rate performance of the secondary battery.

In some embodiments, in S20, a ratio of dry weight of the raw material to mass of the oxidizing solution is ≤ 0.6, for example, it may be ≤0.55, ≤0.5, ≤0.45, ≤0.4, ≤0.35, ≤0.3, ≤0.25, and ≤0.2.

After the covalent bonds on the surface of the raw material particles are destroyed by the grinder, the sites of this part of the broken bonds may react with the oxidizing solution to introduce the oxygen-containing functional groups. When the ratio of dry weight of the raw material to mass of the oxidizing solution is too large, there is too little oxidizing solution, resulting in a failure in forming a slurry state of the material in the grinder. Then, the contact between the oxidizing solution and the raw material particles is not uniform, and some of the raw material particles are unable to contact the oxidizing solution, which results in fewer distribution regions of the introduced oxygen-containing functional groups on the surface of the obtained carbonaceous material particles. In this case, the cycling performance and rate performance of regions on the surface of the obtained carbonaceous material particles where the oxygen-containing functional groups cannot be introduced are poorer, making the cycling performance and rate performance of the entire secondary battery poor. Moreover, when the ratio of dry weight of the raw material to mass of the oxidizing solution is too large, there is too little oxidizing solution, and the material in the grinder is too dry and basically flocculent. In this case, the wet grinding effect is poor, which results in the small amount of oxygen-containing functional groups introduced on the surface of the obtained carbonaceous material particles, and also leading to an insignificant optimization effect on the cycling performance and rate performance of the secondary battery. In this case, the carbonaceous material has a low content of element O as tested by X-ray photoelectron spectroscopy.

The actual volume of the grinder and the wet grinding effect also need to be considered in the design of the ratio of dry weight of the raw material to mass of the oxidizing solution. Further, the ratio of dry weight of the raw material to mass of the oxidizing solution should not be too small. When materials in the grinder have the same volume, because the ratio of dry weight of the raw material to mass of the oxidizing solution is too small, it will result in too little raw material that can be processed in each grinding, affecting the production efficiency. When the raw material has the same dry weight, because the ratio of dry weight of the raw material to mass of the oxidizing solution is too small, the mass of the oxidizing solution is too large, and in this case there is too much material in the grinder, affecting the wet grinding effect. In addition, there may also be a situation in which more oxygen-containing functional groups are introduced on the surface of the carbonaceous material particles, resulting in the carbonaceous material having a high content of element O as tested by X-ray photoelectron spectroscopy, further resulting in a deterioration in optimization effects of the cycling performance and rate performance of the secondary battery.

In some embodiments, in S20, a ratio of dry weight of the raw material to mass of the oxidizing solution may be 0.1-0.6, 0.1-0.5, 0.1-0.5, and 0.1-0.4 Therefore, on the one hand, the production efficiency can be improved, and on the other hand, the surface of the obtained carbonaceous material can have an appropriate content of oxygen-containing functional groups, and the carbonaceous material can also greatly improve the cycling performance and rate performance of the secondary battery.

In some embodiments, in S20, the oxidizing solution has a concentration of ≥0.1 moL/L.

When the concentration of the oxidizing solution is too low, although a large number of covalent bonds are broken on the surface of the raw material particles during grinding, only a small amount of the broken covalent bonds are finally transformed into oxygen-containing functional groups due to the small amount of solute and the weak oxidizing capacity, and the remaining bond-broken sites are retained and will be used as sites for trapping active ions subsequently. This results in a blocked transport coherence of the active ions on the surface of the obtained carbonaceous material particles, leading to a deterioration of the kinetic properties of the carbonaceous material, and also deteriorating the cycling performance and the rate performance. In this case, the carbonaceous material has a low content of element O as tested by X-ray photoelectron spectroscopy.

Further, the concentration of the oxidizing solution should not be too large, because on the one hand, it may increase the safety risk, and on the other hand, it may introduce more oxygen-containing functional groups on the surface of the obtained carbonaceous material particles, which results in the carbonaceous material having a high content of element O as tested by X-ray photoelectron spectroscopy, and also results in a poor optimization effect of the cycling performance and rate performance of the secondary battery.

In some embodiments, the oxidizing solution has a concentration of 0.1 moL/L-10 moL/L, 0.2 moL/L-8 moL/L, 0.3 moL/L-5 moL/L, 0.4 moL/L-2.5 moL/L, and 0.5 moL/L-1.5 moL/L. Therefore, on the one hand, the production efficiency can be improved and safety in production can be ensured, and on the other hand, the surface of the obtained carbonaceous material can have an appropriate content of oxygen-containing functional groups, and the carbonaceous material can also greatly improve the cycling performance and rate performance of the secondary battery.

In some embodiments, in S20, the grinding time is 1h-24h, which may be, for example, 2h, 4h, 6h, 8h, 10h, 12h, 14h, 16h, 18h, 20h, 22h, 24h or within a range defined any of these values. Optionally, the grinding time is 2h-20h, 4h-16h, and 6h-12h. Therefore, the surface of the obtained carbonaceous material can have an appropriate content of oxygen-containing functional groups, and the carbonaceous material can also greatly improve the cycling performance and rate performance of the secondary battery.

The grinding medium exerts a large shear force on the raw material particles during grinding. When the grinding time is too long, the shear force is applied for too long, which is easy to cause the raw material particles to be broken, leading to a substantial increase in the specific surface area of the obtained carbonaceous material, and making it necessary to add a larger amount of binder to bond the particles during preparation of the electrode plate. However, the binder is generally an insulating substance, which will cause an increase in the internal resistance of the battery and a decrease in the ionic conductivity and electronic conductivity, thus leading to a deterioration in the cycling performance and rate performance of the secondary battery. In this case, the carbonaceous material has a high content of element O as tested by X-ray photoelectron spectroscopy.

When grinding, the covalent bonds on the surface of the raw material particles are easy to be damaged under the shear force, and then the sites of this part of broken bonds are easy to react with the oxidizing solution to introduce oxygen-containing functional groups. When the grinding time is too short, the oxygen-containing functional groups introduced on the surface of the obtained carbonaceous material particles are fewer, making the cycling performance and rate performance of the secondary battery poor. In this case, the carbonaceous material has a low content of element O as tested by X-ray photoelectron spectroscopy.

In the present application, the oxidizing solution refers to a solution obtained by uniformly mixing an oxidizing solute having an oxidizing capacity and capable of introducing oxygen-containing functional groups on the surface of the particles with a solvent. In some embodiments, in S20, the oxidizing solution has a solute including one or more selected from nitric acid, sulfuric acid and perchloric acid and has a solvent including water.

Therefore, on the one hand, it can ensure that the surface of the obtained carbonaceous material has an appropriate content of oxygen-containing functional groups, on the other hand, it can avoid the introduction of other impurity elements, thereby reducing the irreversible consumption of active ions.

In some embodiments, in S20, the grinding speed is 100 rpm-1200 rpm.

In some embodiments, in S20, the grinder includes a ball mill.

In some embodiments, in S20, the grinder includes milling balls such as zirconia balls. Optionally, the grinding balls may have a diameter of 2 mm-16 mm. Thus, it helps to enhance the grinding effect and significantly improve the cycling performance and rate performance of the secondary battery.

In some embodiments, in S20, the volume percentage of all materials (including the grinding medium, raw material and oxidizing solution) in the grinder may be 1/5-3/4, based on a volume of the grinder (e.g., may be the volume of a mill pot in a ball mill). The production efficiency can thus be improved on the one hand, and the wet grinding effect can be improved on the other hand.

In some embodiments, in S30, the washing may refer to washing with water. Washing with water may be performed one or more than two times until the pH of a filtrate is equal to 7±0.5.

In some embodiments, in S30, the drying may refer to vacuum drying. Optionally, the drying temperature is 60°C-120°C. Optionally, the drying time is 1h-24h.

In some embodiments, the preparation method includes the steps of S10, providing a raw material, the raw material including a hard carbon material; S20, grinding the raw material with an grinding medium and an oxidizing solution in a grinder, where a ratio of dry weight of the raw material to mass of the grinding medium is ≤1, optionally 0.2-1, and a ratio of dry weight of the raw material to mass of the oxidizing solution is ≤0.6, optionally 0.1-0.6, the oxidizing solution has a concentration of ≥0.1 moL/L, optionally 0.1 moL/L-10 moL/L, and the grinding time is 1h-24h, optionally 4h-16h; and S30, washing and drying a product obtained from the grinding to obtain a carbonaceous material. Thus, the carbonaceous material obtained by the preparation method of the present application can substantially improve the cycling performance and rate performance of the secondary battery.

### Secondary battery

In a third aspect, an embodiment of the present application provides a secondary battery.

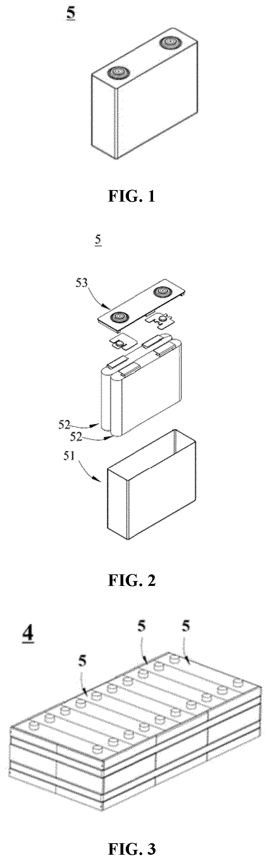

The secondary battery mentioned in the examples or embodiments of the present application refers to a single physical module that includes one or more battery cells to provide higher voltage and capacity. For example, the secondary battery mentioned in the present application may include a battery cell, a battery module, a battery pack, or the like. The battery cell is the smallest unit of the secondary battery, which can realize the function of charging and discharging alone. The shape of the battery cell is not particularly limited in the present application, and it may be cylindrical, square, or any other shape. For example, Fig. 1 is a battery cell 5 with a square structure as an example.

In some embodiments, the battery cell includes an electrode assembly and an electrolyte, and the battery cell may further include an outer package. The outer package can be used to encapsulate the electrode assembly and electrolyte. The outer package may be a hard case, such as a hard plastic case, an aluminum case, or a steel case. The outer package may also be a soft package, such as a pouch. The material of the pouch may be a plastic, such as one or more of polypropylene (PP), polybutylene terephthalate (PBT) and polybutylene succinate (PBS).

The electrode assembly usually includes a positive electrode plate, a negative electrode plate, and the like. During charging and discharging of the battery, active ions are intercalated and deintercalated back and forth between the positive and negative electrode plates, and the electrolyte serves to conduct ions between the positive and negative electrode plates. The electrode assembly may be made by a winding process or stacking process.

In some embodiments, referring to Fig. 2, the outer package may include a case 51 and a cover plate 53. The case 51 can include a bottom plate and a side plate connected to the bottom plate, with the bottom plate and the side plate enclosing to form an accommodating cavity. The case 51 has an opening that communicates with the accommodating cavity, and the cover plate 53 is used to cover the opening to close the accommodating cavity. The electrode assembly 52 is encapsulated within the accommodating cavity. The number of electrode assemblies 52 contained in the battery cell 5 can be one or more, and can be adjusted according to requirements.

In some embodiments of the present application, the battery cells can be assembled into a battery module, the number of battery cells included in the battery module can be multiple, and the specific number can be adjusted according to the application and capacity of the battery module. Fig. 3 is a schematic diagram of a battery module 4 as an example. Referring to Fig. 3, in the battery module 4, a plurality of battery cells 5 may be sequentially arranged along a length direction of the battery module 4. Of course, the battery cells can be arranged in any other way. Further, the plurality of battery cells 5 may be fastened through fasteners.

Optionally, the battery module 4 may further include a shell having an accommodating space, in which the plurality of battery cells 5 are accommodated.

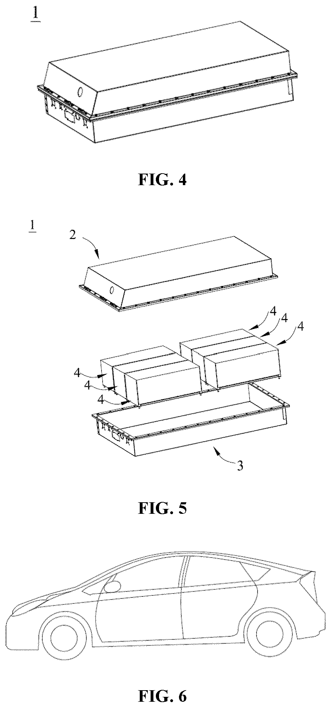

In some embodiments, the aforementioned battery modules can further be assembled into a battery pack, and the number of battery modules included in the battery pack can be adjusted according to the application and capacity of the battery pack. Figs. 4 and 5 are schematic diagrams of a battery pack 1 as an example. As shown in Figs. 4 and 5, the battery pack 1 may include a battery box and a plurality of battery modules 4 arranged in the battery box. The battery box includes an upper box 2 and a lower box 3, where the upper box 2 is used to cover the lower box 3 to form an enclosed space for accommodating the battery modules 4. The plurality of battery modules 4 can be arranged in the battery box in any manner.

### [Negative electrode plate]

In some embodiments, the negative electrode plate includes a negative electrode current collector and a negative electrode film layer disposed on at least one surface of the negative electrode current collector. For example, the negative electrode current collector has two opposite surfaces in the direction of its own thickness, and the negative electrode film layer is disposed on either or both of the two opposite surfaces of the negative electrode current collector.

In some embodiments, the negative electrode film layer includes the carbonaceous material according to the first aspect of the embodiment of the present application or a carbonaceous material prepared by the method according to the second aspect of the embodiment of the present application. Thus, the cycling performance and rate performance of the secondary battery can be improved greatly.

In some embodiments, the negative electrode film layer may further include other negative electrode active materials in addition to the carbonaceous material described above. For example, the negative electrode active material includes but is not limited to one or more of natural graphite, artificial graphite, soft carbon, a silicon-based material, a tin-based material, and lithium titanate. The silicon-based material may include one or more of elemental silicon, silicon oxide, silicon-carbon composite, silicon-nitrogen composite, and silicon alloy. The tin-based material may include one or more of elemental tin, tin oxide, and tin alloy.

In some embodiments, the negative electrode film layer further optionally includes a conductive agent. The present application does not specifically limit the type of the negative electrode conductive agent described. As an example, the negative electrode conductive agent may include one or more of superconducting carbon, conductive graphite, acetylene black, carbon black, Ketjen black, carbon dot, carbon nanotube, graphene, and carbon nanofiber.

In some embodiments, the negative electrode film layer further optionally includes a negative electrode binder. The present application does not specifically limit the type of the negative electrode binder described. As an example, the binder may include one or more of styrene butadiene rubber (SBR), watersoluble unsaturated resin SR-1B, water-based acrylic resin (e.g., polyacrylic acid PAA, polymethacrylic acid PMAA, and sodium polyacrylate PAAS), polyacrylamide (PAM), polyvinyl alcohol (PVA), sodium alginate (SA) and carboxymethyl chitosan (CMCS).

In some embodiments, the negative electrode film layer further optionally includes other additives. As an example, the other additives may include thickeners, for example, sodium carboxymethyl cellulose (CMC), PTC thermistor material and the like.

In some embodiments, the negative electrode current collector may be a metal foil or a composite current collector. In an example, the metal foil may be a copper foil. The composite current collector may include a high molecular material substrate layer and a metal material layer formed on at least one surface of the high molecular material substrate layer. As an example, the metal material may include one or more of copper, copper alloy, nickel, nickel alloy, titanium, titanium alloy, silver, and silver alloy. As an example, the high molecular material substrate layer may include one or more of polypropylene (PP), polyethylene terephthalate (PET), polybutylene terephthalate (PBT), polystyrene (PS), and polyethylene (PE).

The negative electrode film layer is usually formed by coating a negative electrode slurry on the negative electrode current collector, followed by drying and cold pressing. The negative electrode slurry is generally formed by dispersing the negative electrode active material, the optional conductive agent, the optional binder, and other optional additives in a solvent and sufficiently stirring the mixture. The solvent may be but is not limited to N-methylpyrrolidone (NMP) or deionized water.

The negative electrode plate does not exclude additional functional layers other than the negative electrode film layer. For example, in some embodiments, the negative electrode plate described in the present application further includes a conductive primer layer (for example, consisting of a conductive agent and a binder) disposed on a surface of the negative electrode current collector and sandwiched between the negative electrode current collector and the negative electrode film layer. In some embodiments, the negative electrode plate described in the present application further includes a protective layer covering a surface of the negative electrode film layer.

### [Positive electrode plate]

In some embodiments, the positive electrode plate includes a positive electrode current collector, and a positive electrode film layer disposed on at least one surface of the positive electrode current collector. For example, the positive electrode current collector has two opposite surfaces in the direction of its own thickness, and the positive electrode film layer is disposed on either or both of the two opposite surfaces of the positive electrode current collector.

The positive electrode current collector may be a metal foil or a composite current collector. As an example, the metal foil may be an aluminum foil. The composite current collector may include a high molecular material substrate layer and a metal material layer formed on at least one surface of the high molecular material substrate layer. As an example, the metal material may include one or more of aluminum, aluminum alloy, nickel, nickel alloy, titanium, titanium alloy, silver, and silver alloy. As an example, the high molecular material substrate layer may include one or more of polypropylene (PP), polyethylene terephthalate (PET), polybutylene terephthalate (PBT), polystyrene (PS), and polyethylene (PE).

The positive electrode film layer typically includes a positive electrode active material, optionally a binder and optionally a conductive agent. The positive electrode film layer is usually formed by coating a positive electrode slurry on the positive electrode current collector, followed by drying and cold pressing. The positive electrode slurry is generally formed by dispersing the positive electrode active material, the optional conductive agent, the optional binder and any other components in a solvent and sufficiently stirring the mixture. The solvent may be but is not limited to N-methylpyrrolidone (NMP). As an example, the binder for the positive electrode film layer may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. As an example, the conductive agent for the positive electrode film layer includes one or more of superconducting carbon, conductive graphite, acetylene black, carbon black, Ketjen black, carbon dots, carbon nanotubes, graphene, and carbon nanofiber.

The positive electrode active material may be a positive electrode active material for secondary batteries well-known in the art.

When the secondary battery in the present application is a lithium-ion battery, the positive electrode active material may include, but is not limited to, one or more of lithium-containing transition metal oxide, lithium-containing phosphate, and respective modified compounds thereof. Examples of the lithium transition metal oxide may include, but are not limited to, one or more of lithium-cobalt oxide, lithium-nickel oxide, lithium-manganese oxide, lithium-nickel-cobalt oxide, lithium-manganese-cobalt oxide, lithium-nickel-manganese oxide, lithium-nickel-cobalt-manganese oxide, lithium-nickel-cobalt-aluminum oxide, and modified compounds thereof. Examples of the lithium-containing phosphate may include, but are not limited to, one or more of lithium iron phosphate, composites of lithium iron phosphate and carbon, lithium manganese phosphate, composites of lithium manganese phosphate and carbon, lithium manganese iron phosphate, composites of lithium manganese iron phosphate and carbon, and respective modified compounds thereof.

In some embodiments, in order to further increase the energy density of the secondary battery, the positive electrode active material for the lithium-ion battery may include one or more of a lithium transition metal oxide with a general formula LiₐNi_{b}Co_{c}M_{d}OₑA_{f} and modified compounds thereof. 0.8≤a≤1.2, 0.5≤b<1, 0<c<1, 0<d<1, 1≤e≤2, and 0≤f≤1, M includes one or more selected from Mn, Al, Zr, Zn, Cu, Cr, Mg, Fe, V, Ti, and B, and A includes one or more selected from N, F, S, and Cl.

As an example, the positive electrode active material for the lithium-ion battery may include one or more of LiCoO₂, LiNiO₂, LiMnO₂, LiMn₂O₄, LiNi_{1/3}Co_{1/3}Mn_{1/3}O₂(NCM333), LiNi_{0.5}Co_{0.2}Mn_{0.3}O₂(NCM523), LiNi_{0.6}Co_{0.2}Mn_{0.2}O₂(NCM622), LiNi_{0.8}Co_{0.1}Mn_{0.1}O₂(NCM811), LiNi_{0.85}Co_{0.15}Al_{0.05}O₂, LiFePO₄ and LiMnPO₄.

When the secondary battery of the present application refers to a sodium-ion battery, the positive electrode active material may include, but is not limited to, one or more of a sodium-containing transition metal oxide, a polyanionic material (e.g., phosphate, fluorophosphate, pyrophosphate, and sulfate), and a Prussian-blue material.

As an example, the positive electrode active material for the sodium-ion battery may include one or more of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian-blue material, and a material with a general formula of XₚM'_{q}(PO₄)ᵣOₓY₃₋ₓ. In the general formula XₚM'_{q}(PO₄)ᵣOₓY₃₋ₓ, where 0<p≤4, 0<q ≤2, 1≤r≤3, and 0≤x≤2, X includes one or more of H⁺, Li⁺, Na⁺, K⁺, and NH₄⁺; M' represents transition metal cations that may include one or more of V, Ti, Mn, Fe, Co, Ni, Cu, and Zn; and Y represents halogen anions that may include one or more of F, Cl, and Br.

In the present application, the above-mentioned modified compounds of the various positive electrode active materials may be obtained by modifying the positive electrode active materials by doping and/or surface coating and doping.

### [Electrolyte]

The type of the electrolyte is not particularly limited in the present application, and can be selected according to actual needs. For example, the electrolyte may be selected from at least one of a solid electrolyte and a liquid electrolyte (i.e., an electrolyte solution).

In some embodiments, the electrolyte refers to the electrolyte solution containing an electrolyte salt and a solvent.

In some embodiments, the type of the electrolytic salt is not specifically limited, which can be selected according to actual needs.

When the secondary battery in the present application is a lithium-ion battery, as an example, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluoro bis(oxalato)phosphate (LiDFOP) and lithium tetrafluoro(oxalato)phosphate (LiTFOP).

When the secondary battery of the present application is a sodium-ion battery, the electrolyte salt may include one or more of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bis(trifluoromethanesulfonyl)imide (NaTFSI), sodium trifluoromethanesulfonate (NaTFS), sodium-difluoro (oxalato)borate (NaDFOB), sodium bis(oxalato)borate (NaBOB), sodium difluorophosphate (NaPO₂F₂), sodium-difluoro bis(oxalato) phosphate (NaDFOP), and sodium tetrafluoro(oxalato)phosphate (NaTFOP).

The type of the solvent is not particularly limited and can be selected according to actual needs. In some embodiments, as an example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-gamma-butyrolactone (GBL), sulfolane (SF), methyl sulfonyl methane (MSM), ethyl methanesulfonate (EMS), and ethylsulfonyl ethane (ESE).

In some embodiments, the electrolyte solution further optionally contains an additive. For example, the additive may include a negative electrode film-forming additive, or may include a positive electrode film-forming additive, and may further include an additive capable of improving certain performances of the battery, such as an additive for improving the overcharging performance of the battery, an additive for improving the high-temperature performance of the battery, and an additive for improving the low-temperature power performance of the battery.

### [Separator]

The secondary battery using an electrolyte solution and some secondary batteries using solid electrolytes further include a separator. The separator is disposed between the positive electrode plate and the negative electrode plate and functions to separate. The type of the separator is not particularly limited in the present application, and any well-known separator with a porous structure having good chemical stability and mechanical stability may be selected.

In some embodiments, the material of the separator may include one or more of glass fiber, non-woven cloth, polyethylene, polypropylene, and polyvinylidene fluoride. The separator may be a single-layer film or a multi-layer composite film. When the separator is a multi-layer composite film, the materials of the layers may be the same or different.

### [Preparation method]

The preparation method of a secondary battery in the present application is well-known. In some embodiments, the positive electrode plate, the separator, the negative electrode plate, and the electrolyte solution may be assembled to form a secondary battery. As an example, the positive electrode plate, the separator, the negative electrode plate may be formed into an electrode assembly by a winding process and/or a stacking process, and the electrode assembly is placed in an outer package, dried, and injected with the electrolyte solution, followed by processes such as vacuum encapsulation, standing, formation and shaping, to obtain a battery cell. A plurality of battery cells may be connected in series or in parallel or in parallel-series to form a battery module. A plurality of battery modules may be connected in series or in parallel or in parallel-series to form a battery pack. In some embodiments, the plurality of battery cells may also directly form a battery pack.

### Electrical apparatus

In a fourth aspect, the present application provides an electrical apparatus, where the electrical apparatus includes the secondary battery of the present application. The secondary battery can be used as a power source of the electrical apparatus, and can also be used as an energy storage unit of the electrical apparatus. The electrical apparatus may be, but is not limited to, a mobile device (e.g., a mobile phone, a tablet PC and a laptop), an electric vehicle (such as an all-electric vehicle, a hybrid electric vehicle, a plug-in hybrid electric vehicle, an electric bicycle, an electric scooter, an electric golf cart, an electric truck), an electric train, a ship, a satellite, an energy storage system, etc.

For the electrical apparatus, the specific type of the secondary battery, such as a battery cell, a battery module, or a battery pack, can be selected based on the needs for use.

Fig. 6 is a schematic diagram of an electrical apparatus as an example. The electrical apparatus is an all-electric vehicle, a hybrid electric vehicle or a plug-in hybrid electric vehicle, and the like. In order to meet the requirements of the electrical apparatus for high power and high energy density, a battery pack or a battery module can be used as a power source.

As another example, the electrical apparatus may be a mobile phone, a tablet, a laptop, etc. The electrical apparatus is generally required to be light and thin, and can use a battery cell as a power source.

### Examples

Content disclosed in the present application is described in detail in the following examples. These examples are only for illustrative purposes because various modifications and changes made without departing from the scope of the content disclosed in the present application are apparent to persons skilled in the art. Unless otherwise stated, all parts, percentages, and ratios reported in the following examples are based on mass, all reagents used in the examples are commercially available or synthesized in a conventional manner, and can be used directly without further treatment, and all instruments used in the examples are commercially available.

### Example 1

Phenolic resin was used as a carbon source, in a nitrogen atmosphere, the temperature was raised to 1400°C at a rate of 5°C/min, then kept for 12h, and then crushed by ball milling to obtain a hard carbon material with a Dv50 of 6±0.5 µm. The hard carbon material, a grinding medium of zirconia balls and an oxidizing solution were placed in a mill pot of a planetary ball mill at a rotational speed of 600 rpm for 10 h, followed by washing and drying to obtain a carbonaceous material. A ratio of dry weight of the hard carbon material to mass of the grinding medium was 0.6, a ratio of dry weight of the hard carbon material to mass of the oxidizing solution was 0.2, the oxidizing solution had a concentration of 0.1 moL/L, perchloric acid was used as a solute, and water was used as a solvent.

The carbonaceous material was dried in vacuum at 120°C for 12h and sealed and stored in an aluminum-plastic bag, and then the content of element O was tested using an X-ray photoelectron spectrometer and denoted as A, and the content of element O was tested using an elemental analyzer and denoted as B. The test instrument may be a Nexsa type/EscaLab 250Xi X-ray photoelectron spectrometer of Thermo Fisher Scientific, USA and a Flash 2000/Flash Smart elemental analyzer of Thermo Fisher Scientific, USA.

The BET specific surface area of the carbonaceous material was tested by a nitrogen-adsorption based specific surface area analysis with reference to GB/T 19587-2017. The test instrument may be an ASAP 3020 analyzer for measuring the surface area and pore size from Micromeritics, USA.

### Examples 2-16 and Comparative Examples 3-7

The preparation method of a carbonaceous material is similar to that in Example 1, with the difference being that preparation process parameters of the carbonaceous material are adjusted, as detailed in Table 1.

### Comparative Example 1

Phenolic resin was used as a carbon source, in a nitrogen atmosphere, the temperature was raised to 1400°C at a rate of 5°C/min, then kept for 12h, and then crushed by ball milling to obtain a hard carbon material with a Dv50 of 6±0.5 µm as a carbonaceous material.

### Comparative Example 2

Phenolic resin was used as a carbon source, in a nitrogen atmosphere, the temperature was raised to 1400°C at a rate of 5°C/min, then kept for 12h, and then crushed by ball milling to obtain a hard carbon material with a Dv50 of 6±0.5 µm. The hard carbon material was soaked in an aqueous solution of perchloric acid with a concentration of 1 moL/L for 48 h, followed by washing and drying to obtain a carbonaceous material. A ratio of dry weight of the hard carbon material to mass of the aqueous solution of perchloric acid was 0.1.

### Preparation of secondary battery

The carbonaceous material was mixed with a conductive agent carbon black (Super P), a binder styrenebutadiene rubber, and a thickener sodium carboxymethyl cellulose in an appropriate amount of solvent deionized water according to a weight ratio of 96:1:1:2 with thorough stirring to form a negative electrode slurry. The negative electrode slurry was coated on both surfaces of a negative electrode collector copper foil, followed by drying and cold pressing to obtain a negative electrode plate.

A positive electrode active material NaNi_{1/3}Co_{1/3}Mn_{1/3}O₂ was mixed with the conductive carbon black and polyvinylidene fluoride according to a weight ratio of 96:2.5:1.5, with an appropriate amount of solvent NMP added, followed by uniformly stirring to obtain a positive electrode slurry. The positive electrode slurry was coated on both surfaces of a positive electrode collector aluminum foil, followed by drying and cold pressing to obtain a positive electrode plate.

Ethylene carbonate (EC), diethyl carbonate (DEC) and dimethyl carbonate (DMC) were mixed uniformly according to a volume ratio of 1:1:1 to obtain an organic solvent, and then NaPF₆ was added to the organic solvent to obtain an electrolyte solution with a concentration of 1 mol/L.

A polypropylene film with a thickness of 12 µm was used as a separator. The separator, the positive electrode plate and the negative electrode plate prepared above were placed in order, so that the separator was positioned between the positive electrode plate and the negative electrode plate to play an isolation role, and then the three are wound to obtain an electrode assembly. The electrode assembly was placed in an outer package, dried, and injected with the electrolyte solution prepared above, followed by processes such as vacuum packaging, standing, formation, and capacity grading to obtain a secondary battery.

### Performance Test

### (1) Cycling performance test of secondary battery at 25°C

At 25°C, a secondary battery was charged at a constant current of 1C to a voltage of 4.0V, then charged at a constant voltage to a current of 0.05C, followed by standing for 5 min, and then discharged at a constant current of 1C to a voltage of 1.5V, which is one charge and discharge cycle. Discharge capacity at this time was recorded as discharge capacity of the secondary battery after the first cycle. Repeat the above charge and discharge cycle until the discharge capacity is reduced to 80% of the discharge capacity after the first cycle, and record the number of cycles that the secondary battery has passed at this time.

### (2) Cycling performance test of secondary battery at 45°C

At 45°C, a secondary battery was charged at a constant current of 1C to a voltage of 4.0V, then charged at a constant voltage to a current of 0.05C, followed by standing for 5 min, and then discharged at a constant current of 1C to a voltage of 1.5V, which is one charge and discharge cycle. Discharge capacity at this time was recorded as discharge capacity of the secondary battery after the first cycle. Repeat the above charge and discharge cycle until the discharge capacity is reduced to 80% of the discharge capacity after the first cycle, and record the number of cycles that the secondary battery has passed at this time.

### (3) Rate performance test of secondary battery at 25°C

At 25°C, a secondary battery was charged at a constant current of 0.33C to a voltage of 4.0V, and then charged at constant voltage to a current of 0.05C, followed by standing for 5 min, and then discharged at a constant current of 0.33C to a voltage of 1.5V. Discharge capacity at this time was discharge capacity of the secondary battery at 0.33C.

At 25°C, the secondary battery was charged at a constant current of 1C to a voltage of 4.0V, and then charged at constant voltage to a current of 0.05C, followed by standing for 5 min, and then discharged at a constant current of 1C to a voltage of 1.5V. Discharge capacity at this time was discharge capacity of the secondary battery at 1C.

A ratio of the discharge capacity of the secondary battery at 1C to the discharge capacity of the secondary battery at 0.33C characterizes the rate performance of the secondary battery.

As can be seen from test results in Table 1, when the content A of element O of the carbonaceous material tested by X-ray photoelectron spectroscopy and the content B of element O of the carbonaceous material tested by elemental analysis satisfy A/B ≥3 and 5wt%≤A≤20wt%, the cycling performance and rate performances of the secondary battery can be significantly optimized.

The carbonaceous material provided in the present application is obtained by a wet grinding process of the hard carbon material provided in Comparative Example 1, whereby a suitable content of oxygen-containing functional groups can be introduced on the surface of the hard carbon material provided in Comparative Example 1. The inventors of the present application have found in the course of research that, during charging (i.e., before formation of an SEI film), negative charges can be enriched at oxygen-containing functional groups on the surface of the carbonaceous material, which can induce the rapid decomposition of organic solvents such as esters in the electrolyte solution to increase the content of organic components of the SEI film. The organic components of the SEI film have higher flexibility, which can improve the deformation resistance of the SEI film, make it stable during a long-term cycle, thereby reducing the consumption of active ions during the cycle. The organic components of the SEI film can improve the ion conductivity of the negative electrode side, and avoid the reduction and precipitation of active ions on the negative electrode side during the cycle. The O atoms on the surface of the carbonaceous material can also participate in the formation of the SEI film, which is conducive to improving the adhesion of the SEI film on the surface of carbonaceous material particles, and is conducive to the high stability of the SEI film in the long-term cycle process, so that the consumption of active ions during the cycle can be reduced. The secondary battery containing the carbonaceous material provided in the present application may have substantially improved cycling performance and rate performance. It can also be seen from the test results of Examples 1-16 that when the carbonaceous material further satisfies 6≤A/B≤9.2, 10wt%≤A≤16wt% and 1.5wt%≤B≤3wt%, the optimization effect of the cycling performance and rate performance of the secondary battery is better.

With an oxidizing solution soaking method used in Comparative Example 2, oxygen-containing functional groups can also be introduced on the surface of the hard carbon material provided in Comparative Example 1, but the amount of the introduced oxygen-containing functional groups is small, which results in an insignificant optimization effect on the cycling performance and rate performance of the secondary battery.

It should be noted that the present application is not limited to the embodiments above. The above-described embodiments are merely illustrative, and embodiments having substantively the same composition as the technical idea and exerting the same effects within the scope of the technical solution of the present application are all included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

**Table 1**

| No. | Ratio of dry weight of raw material to mass of grinding medium | Ratio of dry weight of raw material to mass of oxidizing solution | Oxidizing solution | | Ball Milling time (h) | Grinding speed (rpm) | A/B | A | B | BET specific surface area (m²/g) | Number of cycles at 25°C | Number of cycles at 45°C | Rate performance at 25°C |
|---|---|---|---|---|---|---|---|---|---|---|---|---|---|
| | | | Solute | Concentration (mol/L) | | | | | | | | | |
| Example 1 | 0.6 | 0.2 | Perchloric acid | 0.1 | 10 | 600 | 3.12 | 5.30wt% | 1.70wt% | 5.6 | 2241 | 1107 | 79.4% |
| Example 2 | 0.6 | 0.2 | Perchloric acid | 0.2 | 10 | 600 | 4.59 | 7.80wt% | 1.70wt% | 5.8 | 4567 | 2651 | 85.2% |
| Example 3 | 0.6 | 0.2 | Perchloric acid | 0.5 | 10 | 600 | 5.53 | 9.40wt% | 1.70wt% | 6.0 | 7139 | 4136 | 88.3% |
| Example 4 | 0.6 | 0.2 | Perchloric acid | 1 | 10 | 600 | 8.00 | 13.60wt% | 1.70wt% | 6.2 | 10000 | 5920 | 95.4% |
| Example 5 | 0.6 | 0.2 | Perchloric acid | 5 | 10 | 600 | 9.53 | 16.20wt% | 1.70wt% | 6.9 | 6528 | 3219 | 89.4% |
| Example 6 | 0.6 | 0.2 | Perchloric acid | 1 | 1 | 600 | 4.18 | 7.10wt% | 1.70wt% | 3.9 | 3207 | 1713 | 83.0% |
| Example 7 | 0.6 | 0.2 | Perchloric acid | 1 | 15 | 600 | 6.22 | 14.30wt% | 2.30wt% | 7.6 | 6738 | 4630 | 89.2% |
| Example 8 | 0.6 | 0.2 | Perchloric acid | 1 | 24 | 600 | 5.87 | 17.60wt% | 3.00wt% | 9.1 | 3115 | 1920 | 84.6% |
| Example 9 | 0.6 | 0.6 | Perchloric acid | 1 | 10 | 600 | 4.35 | 7.40wt% | 1.70wt% | 5.6 | 3872 | 2152 | 83.7% |
| Example 10 | 0.6 | 0.4 | Perchloric acid | 1 | 10 | 600 | 6.12 | 10.40wt% | 1.70wt% | 5.9 | 8707 | 4583 | 89.1% |
| Example 11 | 0.6 | 0.1 | Perchloric acid | 1 | 10 | 600 | 8.65 | 14.70wt% | 1.70wt% | 6.7 | 8451 | 4032 | 91.2% |
| Example 12 | 1 | 0.2 | Perchloric acid | 1 | 10 | 600 | 4.06 | 6.90wt% | 1.70wt% | 5.7 | 3021 | 1568 | 81.2% |
| Example 13 | 0.2 | 0.2 | Perchloric acid | 1 | 10 | 600 | 9.12 | 15.50wt% | 1.70wt% | 6.5 | 7329 | 3804 | 89.8% |
| Example 14 | 0.6 | 0.2 | Nitric acid | 1 | 10 | 600 | 6.71 | 11.40wt% | 1.70wt% | 5.1 | 9523 | 5237 | 92.8% |
| Example 15 | 0.6 | 0.2 | Sulfuric acid | 1 | 10 | 600 | 4.24 | 7.20wt% | 1.70wt% | 5.7 | 3467 | 2013 | 83.3% |
| Example 16 | 0.6 | 0.2 | Perchloric acid and sulfuric acid with volume ratio of 1:1 | 1 | 10 | 600 | 5.92 | 15.40wt% | 2.60wt% | 8.2 | 5124 | 3910 | 86.3% |
| Comparative Example 1 | / | / | / | / | / | / | 1.06 | 1.80wt% | 1.70wt% | 2.5 | 243 | 205 | 64.9% |
| Comparative Example 2 | / | 0.1 | Perchloric acid | 1 | 48 (soaking time) | / | 2.65 | 4.50wt% | 1.70wt% | 2.4 | 691 | 382 | 70.4% |
| Comparative Example 3 | 0.6 | 0.2 | Perchloric acid | 0.05 | 10 | 600 | 2.71 | 4.60wt% | 1.70wt% | 5.3 | 853 | 431 | 73.1% |
| Comparative Example 4 | 0.6 | 0.2 | Perchloric acid | 1 | 0.5 | 600 | 2.24 | 3.80wt% | 1.70wt% | 3.5 | 612 | 336 | 71.0% |
| Comparative Example 5 | 0.6 | 0.2 | Perchloric acid | 1 | 30 | 600 | 5.53 | 22.10wt% | 4.00wt% | 15.3 | 710 | 325 | 75.1% |
| Comparative Example 6 | 0.6 | 0.8 | Perchloric acid | 1 | 10 | 600 | 2.35 | 4.00wt% | 1.70wt% | 5.2 | 684 | 369 | 71.5% |
| Comparative Example 7 | 1.5 | 0.2 | Perchloric acid | 1 | 10 | 600 | 2.06 | 3.50wt% | 1.70wt% | 4.8 | 452 | 268 | 68.4% |

## Claims

1. A carbonaceous material, wherein the content of element O of the carbonaceous material tested by X-ray photoelectron spectroscopy is denoted as A, the content of element O of the carbonaceous material tested by elemental analysis is denoted as B, and the carbonaceous material satisfies A/B≥3 and 5wt%≤A≤20wt%.

2. The carbonaceous material according to claim 1, wherein,
3≤A/B≤10, optionally, 6≤A/B≤9.2; and/or,
5wt%≤A≤16 wt%, optionally, 10wt%≤A≤16wt%.

3. The carbonaceous material according to claim 1 or 2, wherein 1.5wt%≤B≤6wt%, optionally, 1.5wt%≤B≤3 wt%.

4. The carbonaceous material according to any one of claims 1-3, wherein the carbonaceous material has a specific surface area of ≤10 m²/g, optionally 0.1 m²/g-10 m²/g.

5. The carbonaceous material according to any one of claims 1-4, wherein the carbonaceous material comprises a plurality of nanopore structures.

6. The carbonaceous material according to any one of claims 1-5, wherein,
in a Raman spectrum of the carbonaceous material, I_{d}/I_{g} is 0.90-1.25, optionally 0.95-1.10, I_{d} indicates an intensity of peak d of Raman shift in the range of 1350±50cm⁻¹, and I_{g} denotes an intensity of peak g of Raman shift in the range of 1580±50cm⁻¹; and/or,
a crystal face (002) of the carbonaceous material has an interlayer spacing of ≥0.37 nm, optionally 0.37 nm-0.42 nm; and/or,
in an X-ray diffraction spectrum of the carbonaceous material, the peak of the crystal face (002) has a corresponding 2θ value between 22° and 24°.

7. The carbonaceous material according to any one of claims 1-6, wherein the carbonaceous material satisfies at least one of the following conditions (1) to (4):
(1) the carbonaceous material has a volume particle size Dv50 of 3 µm-15 µm, optionally 4 µm-6 µm;
(2) the carbonaceous material has a volume particle size Dv90 of 8 µm-30 µm, optionally 9 µm-12 µm;
(3) the carbonaceous material has a powder compacted density of 0.92 g/cm³-1.05 g/cm³, optionally 0.95 g/cm³-1.02 g/cm³ under an acting force of 50000 N; and
(4) the carbonaceous material has a tap density of 0.80 g/cm³-0.95 g/cm³, optionally 0.85 g/cm³-0.90 g/cm³.

8. A preparation method of a carbonaceous material, comprising the steps of S10, providing a raw material, the raw material comprising a hard carbon material; S20, grinding the raw material with a grinding medium and an oxidizing solution in a grinder; S30, washing and drying a product obtained from the grinding to obtain a carbonaceous material, wherein the content of element O of the carbonaceous material tested by X-ray photoelectron spectroscopy is denoted as A, the content of element O of the carbonaceous material tested by elemental analysis is denoted as B, and the carbonaceous material satisfies A/B≥3 and 5wt%≤A≤20wt%.

9. The method according to claim 8, wherein in S20,
a ratio of dry weight of the raw material to mass of the grinding medium is ≤1, optionally 0.2-1; and/or,
a ratio of dry weight of the raw material to mass of the oxidizing solution is ≤0.6, optionally 0.1-0.6; and/or,
the oxidizing solution has a concentration of ≥0.1 moL/L, optionally 0.1 moL/L-10 moL/L; and/or,
the grinding time is 1h-24h, optionally 4h-16h.

10. The method according to claim 8 or 9, wherein in S20, the oxidizing solution has a solute comprising one or more selected from nitric acid, sulfuric acid and perchloric acid and has a solvent comprising water.

11. The method according to any one of claims 8-10, wherein in S20, the grinding speed is 100 rpm-1200 rpm.

12. The method according to any one of claims 8-11, wherein in S20, the grinder comprises a ball mill.

13. The method according to any one of claims 8-12, wherein in S20, the volume percentage of all materials in the grinder is 1/5-3/4, based on a volume of the grinder.

14. The method according to any one of claims 8-13, wherein,
in S10, the raw material has a volume particle size Dv50 of 3 µm-15 µm, optionally 4 µm-6 µm; and/or,
in S10, the raw material has a volume particle size Dv90 of 8 µm-30 µm, optionally 9 µm-12 µm.

15. The method according to any one of claims 8-14, wherein the raw material is prepared by heating a carbon source to 1000°C-1600°C at a rate of ≤10°C/min under a shielding gas atmosphere and holding the temperature for 1h-24h, and then crushing to obtain the raw material.

16. A secondary battery, comprising a negative electrode plate, the negative electrode plate comprising the carbonaceous material of any one of claims 1- 7 or a carbonaceous material prepared by the method of any one of claims 8-15.

17. An electrical apparatus, comprising the secondary battery of claim 16.
